# EUROPEAN PATENT APPLICATION

(11) **EP 4 424 456 A1**
(43) Date of publication of application: **04.09.2024**
(21) Application number: 22884862.8
(22) Date of filing: 05.01.2022
(51) Int. Cl.: B23K 37/00

(54) **APPARATUS FOR REGULATING WELDING DISTORTION OF BOX STRUCTURE AND REGULATION METHOD**

(30) Priority: 25.10.2021 CN 202111243217
(71) Applicant: CRRC Qingdao Sifang Co., Ltd., Qingdao, Shandong 266111 (CN)
(72) Inventor: HAN, Xiaohui, Qingdao, Shandong 266111 (CN); XING, Yanshuang, Qingdao, Shandong 266111 (CN); LI, Shuaizhen, Qingdao, Shandong 266111 (CN); GUO, Qiangjun, Qingdao, Shandong 266111 (CN); FANG, Xifeng, Qingdao, Shandong 266111 (CN)
(74) Representative: Dilg, Haeusler, Schindelmann Patentanwaltsgesellschaft mbH
(86) International application number: PCT/CN2022/070307
(87) International publication number: WO 2023/070942

(57) **Abstract**

An apparatus for regulating the welding deformation of a box-shaped structure, said apparatus comprising: a supporting part and a regulating part; a supporting surface that supports a box to be welded is formed on the supporting part; the regulating part is connected to the supporting part and at least abuts against a welding surface of said box; during the welding process, the regulating part regulates the flatness of said box by means of regulating the magnitude and/or force application position of a force acting on the welding surface of said box. In the regulation apparatus, multi-point flexible support is arranged on a bolster box-shaped structure, so as to achieve real-time dynamic regulation and step-by-step precision regulation, thereby improving the manufacturing precision of a bolster, and eliminating post-welding modification and repair of the bolster box-shaped structure. Also disclosed is a method for regulating the welding deformation of a box-shaped structure.

## Description

### CROSS-REFERENCE TO RELATED APPLICATION

The present application claims priority to Chinese Patent Application No. 202111243217.1, filed on October 25, 2021, entitled "Apparatus for Regulating Welding Distortion of Box Structure and Regulation Method", which is hereby incorporated by reference in its entirety.

### FIELD

The present application relates to the field of welding, and in particular, to an apparatus and a method for regulating welding deformation of a box-shaped structure.

### BACKGROUND

A bolster beam of a high-speed train, as a welded box-shaped structure composed of aluminum alloy profiles and plates, is an important load-bearing component and a major part of the long, large and thin-walled car body of the high-speed train, and is connected to a bogie of the high-speed train. The box-shaped structure of the bolster beam requires high manufacturing precision, services in harsh environments and conditions, and bears alternating impact loads when the train is operating at high speed. The box-shaped structure of the bolster beam is an asymmetric welded structure with internal reinforcement ribs, complex welding structures and narrow welding space. The structure is generally welded by medium-thick plates that are more than 8 mm. The box-shaped structure has severe welding deformations since there are many welding seams and a large amount of welding, and in addition, the aluminum alloy has a large thermal expansion coefficient at a high temperature. The box-shaped structure of the bolster beam needs to be additionally subjected to post-weld flame heat straightening repair to meet the subsequent assembly requirements of the car body, which results in low production efficiency, strength loss and performance degradation, and severely restricts the further improvement of the manufacturing quality and automation efficiency of the high-speed train car body.

### SUMMARY

Embodiments of the present application provide an apparatus and a method for regulating welding deformation of a box-shaped structure which solves the problems in related art that the bolster beam structure cannot be eliminated from post-weld repair, the welding deformation cannot be effectively suppressed, the workload of repeated verification is large, accurate and dynamic adjustment cannot be made based on an evolution trend and change amount of deformation of the welded structure, and the anti-deformation effect is poor. By providing multi-point flexible supports on the box-shaped structure of the bolster beam, during the welding process, the positions and action force magnitude of positioning supports and rigid constraint points in each work step of the box-shaped structure of the bolster beam are output in real time and quantitatively. The manufacturing accuracy and stress distribution of the box-shaped structure of bolster beam during the welding process are monitored in three-dimension, dynamically and in real time, and the fine regulation in real time and step by step is formed, and the manufacturing accuracy of the bolster beam is improved, the post-weld repair of the box-shaped structure of the bolster beam is eliminated, the manufacturing costs are reduced, and the production efficiency is greatly improved.

Embodiments of the present application further provide a method for finely regulating welding deformation of a box-shaped structure, which solves the problems in related art that the bolster beam structure cannot be eliminated from post-weld repair, the welding deformation cannot be effectively suppressed, the workload of repeated verification is large, accurate and dynamic regulation cannot be made based on an evolution trend and change amount of deformation of the welded structure, and the anti-deformation effect is poor. By constructing a mathematical model of the box-shaped structure of the bolster beam, multi-point flexible supports, dynamical digital compression, and continuously-adjustable position adjustment for the box-shaped structure of the bolster beam is enabled, the manufacturing accuracy and stress distribution of the box-shaped structure of the bolster beam during the welding process are monitored in three-dimension, dynamically and in real time, the refined regulation in real time and step by step is formed, the positions and action force magnitude of positioning support and rigid constraint points in each work step of the bolster beam box-shaped structure, the anti-deformation position, and the anti-deformation amount of the box-shaped structure of the bolster beam are output in real time and quantitatively, thereby the manufacturing accuracy of the bolster beam is improved, the post-weld repair of the box-shaped structure of the bolster beam is eliminated, the manufacturing cost is reduced, and the production efficiency is greatly improved.

An embodiment of the present application provides an apparatus for regulating welding deformation of a box-shaped structure, including: a supporting portion and an adjustment portion; the supporting portion is formed with a supporting surface that supports a to-be-welded box body; the adjustment portion is connected to the supporting portion, and at least abuts against a welding surface of the to-be-welded box body. During a welding process, the adjustment portion regulates a flatness of the to-be-welded box body by adjusting action force magnitude and/or a force application position on the welding surface of the to-be-welded box body.

In an embodiment, the to-be-welded box body at least includes: a first welding surface and a second welding surface; the first welding surface is a surface of the to-be-welded box body proximal to the supporting surface; and the second welding surface is a surface of the to-be-welded box body distal to the first welding surface.

The present embodiment provides an implementation of the to-be-welded box body.

According to an implementation of the present application, a thickness of at least a part of the first welding surface of the to-be-welded box body is smaller than a thickness of a part of the second welding surface.

The present embodiment provides an implementation of the first welding surface and the second welding surface.

According to an implementation of the present application, the supporting portion includes: a supporting table and a drive unit; a surface of the supporting table forms the supporting surface; and the drive unit is connected to the supporting table and is used to adjust a rotation angle of the supporting table to conveniently weld the first welding surface and the second welding surface; where the supporting table is provided with multiple gaps that at least correspond to to-be-welded positions of the first welding surface.

The present embodiment provides an implementation of the adjustment portion.

According to an implementation of the present application, the adjustment portion includes: a plurality of first adjustment seats, a first adjustment cylinder and a first sensing component; the plurality of the first adjustment seats are connected to the supporting table; an end of the first adjustment cylinder is provided on the first adjustment seats, and another end of the first adjustment cylinder abuts against the first welding surface; and the first sensing component is at least connected to the first adjustment cylinder; where during the welding process, a stroke of the first adjustment cylinder is adjusted based on a parameter fed back by the first sensing component to adjust the action force magnitude on the first welding surface.

The present embodiment provides an implementation of the adjustment portion that is provided on the supporting table.

According to an implementation of the present application, the adjustment portion includes: a plurality of second adjustment seats, a second adjustment cylinder, a pressing rod and a second sensing component; the plurality of second adjustment seats are provided on a side portion of the supporting table; an end of the second adjustment cylinder is connected to the second adjustment seat, another end of the second adjustment cylinder is connected to the pressing rod, and the second adjustment cylinder is provided vertically; another end of the pressing rod opposite to the second adjustment cylinder abuts against the second welding surface; and the second sensing component is at least connected to the pressing rod; where during the welding process, a stroke of the second adjustment cylinder is adjusted based on a parameter fed back by the second sensing component to adjust action force magnitude of the pressing rod on the second welding surface.

The present embodiment provides an implementation of the adjustment portion that is provided on the side portion of the supporting table.

According to an implementation of the present application, the adjustment portion further includes: slideways, a plurality of the slideways are provided on the side portion of the supporting table, and the second adjustment seats are slidingly matched with the slideways; where during the welding process, the second adjustment seats slide along an extension direction of the slideways based on the parameter fed back by the second sensing component to adjust a force applying position of the pressing rod on the second welding surface.

The present embodiment provides an implementation of providing the slideways on the side portion of the supporting table.

According to an implementation of the present application, the second adjustment seat includes: a first panel, a second panel and a sliding block; the first panel is connected to the side portion of the supporting table; the second panel is connected to the first panel to form an L-shaped structure; the sliding block is slidingly provided on the second panel; the second adjustment cylinder is connected to the sliding block; and the adjustment portion further includes: a third adjustment cylinder and a pulling rod; the third adjustment cylinder is provided on another surface of the first panel opposite to the side portion of the supporting table; and an end of the pulling rod is connected to the third adjustment cylinder, another end of the pulling rod passes through an opening slot on the second panel and is connected to the sliding block.

The present embodiment provides an implementation of adjusting the force applying position of the pressing rod on the second welding surface.

According to an implementation of the present application, the pressing rod is a rod-shaped structure that may adjust a telescopic length; and during the welding process, the telescopic length of the pressing rod is adjusted based on the parameter fed back by the second sensing component to adjust the force applying position on the second welding surface.

The present embodiment provides an implementation of the pressing rod.

According to an implementation of the present application, the to-be-welded box body is a bolster beam; the bolster beam at least includes: two through pipes, a first cover plate and a second cover plate; the two through pipes are provided at intervals; the first cover plate is in the first welding surface, and is connected to the two through pipes respectively; and the second cover plate is in the second welding surface, and is connected to the two through pipes respectively; where at least a thickness of the first cover plate is smaller than a thickness of the second cover plate.

The present embodiment provides an implementation of the to-be-welded box body which is the bolster beam.

An embodiment of the present application provides a method for regulating welding deformation of the box-shaped structure based on the above-mentioned apparatus for regulating welding deformation of the box-shaped structure, including:
obtaining a deformation amount parameter of a to-be-welded box body during a welding process;
generating an anti-deformation adjustment strategy for regulating a deformation amount of a welding surface of the to-be-welded box body based on the deformation amount parameter; and
performing anti-deformation adjustment on the to-be-welded box body during the welding process in real time based on the anti-deformation adjustment strategy.

According to an implementation of the present application, obtaining the deformation amount parameter of the to-be-welded box body during the welding process includes:
obtaining a first deformation characteristic value and a second deformation characteristic value of the to-be-welded box body during the welding process, where the first deformation characteristic value is a deformation area parameter of the to-be-welded box body, and the second deformation characteristic value is a deformation force parameter corresponding to the first deformation characteristic value; and
generating the deformation amount parameter based on the first deformation characteristic value and the second deformation characteristic value.

The present embodiment provides an implementation of obtaining the deformation amount parameter of the to-be-welded box body during the welding process.

According to an implementation of the present application, generating the anti-deformation adjustment strategy for regulating the deformation amount of the welding surface of the to-be-welded box body based on the deformation amount parameter includes:
obtaining a plurality of preset adjustment areas of the welding surface of the to-be-welded box body, and obtaining all adjustment portions in a corresponding preset adjustment area based on the first deformation characteristic value;
generating adjustment displacement characteristic values of each of the obtained adjustment portions based on the second deformation characteristic value, where the adjustment displacement characteristic values at least include a first direction displacement parameter of each adjustment portion perpendicular to the welding surface of the to-be-welded box body, and a second direction displacement parameter of each adjustment portion parallel to the welding surface of the to-be-welded box body; and
generating the anti-deformation adjustment strategy of the preset adjustment areas based on all adjustment displacement characteristic values.

The present embodiment provides an implementation of generating the anti-deformation adjustment strategy for regulating a flatness of the to-be-welded box body based on the deformation amount parameter.

According to an implementation of the present application, generating the anti-deformation adjustment strategy for regulating the deformation amount of the welding surface of the to-be-welded box body based on the deformation amount parameter further includes:
obtaining an instant welding area of the to-be-welded box body, dynamically fitting the instant welding area with the preset adjustment area, and obtaining an instant adjustment area based on dynamically fitting;
determining, in the instant adjustment area, an adjustment portion that is in an awake state and outside the instant adjustment area, and sending a sleep signal to a corresponding adjustment portion; and
determining, in the instant adjustment area, an adjustment portion that is in a sleep state and inside the instant adjustment area, and sending a wake-up signal to the corresponding adjustment portion.

The present embodiment provides another implementation of generating the anti-deformation adjustment strategy for regulating a flatness of the to-be-welded box body based on the deformation amount parameter.

According to an implementation of the present application, generating the anti-deformation adjustment strategy for regulating the deformation amount of the welding surface of the to-be-welded box body based on the deformation amount parameter further includes:
constructing a digital twin model based on the to-be-welded box body;
obtaining a twin deformation amount parameter of the digital twin model corresponding to the deformation amount parameter of the to-be-welded box body; and
generating the anti-deformation adjustment strategy based on the twin deformation amount parameter.

The present embodiment provides an implementation of constructing the anti-deformation adjustment strategy based on the digital twin model.

According to an implementation of the present application, before obtaining the deformation amount parameter of the to-be-welded box body during the welding process, the method further includes:
constructing a finite element model based on the to-be-welded box body, and loading a welding parameter of the to-be-welded box body in the finite element model;
obtaining a first finite element characteristic value and a second finite element characteristic value based on the welding parameter during a finite element analysis process of the finite element model, where the first finite element characteristic value is an inherent strain parameter of the to-be-welded box body, and the second finite element characteristic value is an elastic strain parameter of the to-be-welded box body; and
generating a finite element analysis parameter based on the first finite element characteristic value and the second finite element characteristic value, and generating the anti-deformation adjustment strategy based on the finite element analysis parameter and the deformation amount parameter.

The present embodiment provides an implementation of constructing the anti-deformation adjustment strategy based on the finite element model.

According to an implementation of the present application, performing anti-deformation adjustment on the to-be-welded box body during the welding process in real time based on the anti-deformation adjustment strategy includes:
obtaining a first anti-deformation adjustment decision and a second anti-deformation adjustment decision in the anti-deformation adjustment strategy, where the first anti-deformation adjustment decision includes a first welding surface of the to-be-welded box body, and the second anti-deformation adjustment decision includes a second welding surface of the to-be-welded box body;
regulating action force magnitude of an adjustment portion on the first welding surface in real time based on the first anti-deformation adjustment decision; and
regulating action force magnitude and/or a force applying position of the adjustment portion on the second welding surface in real time based on the second anti-deformation adjustment decision.

The present embodiment provides an implementation of performing anti-deformation adjustment on the to-be-welded box body during the welding process in real time based on the anti-deformation adjustment strategy.

The above one or more solutions in the present application have at least the following effects: in the apparatus and method for regulating welding deformation of the box-shaped structure according to the present application, by providing multi-point flexible supports on the bolster beam box-shaped structure, during the welding process, the positions and action force magnitude of positioning supports and rigid constraint points in each work step of the bolster beam box-shaped structure, the anti-deformation position, and the anti-deformation amount of the bolster beam box-shaped structure are output in real time and quantitatively. The manufacturing accuracy and stress distribution of the bolster beam box-shaped structure during the welding process are monitored in three-dimension, dynamically and in real time, and the refined regulation in real time and step by step is formed, thereby the manufacturing accuracy of the bolster beam is improved, the post-weld repair of the box-shaped structure of the bolster beam is eliminated, the manufacturing cost is reduced, and the production efficiency is greatly improved.

Additional aspects and advantages of the present application are set forth in part in the description below, and, in part, is apparent from the description, or may be learned by practice of the present application.

### BRIEF DESCRIPTION OF DRAWINGS

To provide a clearer explanation for the technical solutions in the embodiments of the present application or in the related art, a brief description is given to the accompanying drawings required in the description of the embodiments or the related art. The accompanying drawings in the following description are some embodiments of the present application. For those ordinarily skilled in the art, other accompanying drawings may be obtained based on these drawings without any creative effort.
FIG. 1 is a first schematic diagram of an assembly relationship of an apparatus for finely regulating welding deformation of a box-shaped structure according to an embodiment of the present application;
FIG. 2 is a second schematic diagram of an assembly relationship of an apparatus for finely regulating welding deformation of a box-shaped structure according to an embodiment of the present application;
FIG. 3 is a third schematic diagram of an assembly relationship of an apparatus for finely regulating welding deformation of a box-shaped structure according to an embodiment of the present application;
FIG. 4 is a first schematic diagram of an assembly relationship of a bolster beam in an apparatus for finely regulating welding deformation of a box-shaped structure according to an embodiment of the present application;
FIG. 5 is a second schematic diagram of an assembly relationship of a bolster beam in an apparatus for finely regulating welding deformation of a box-shaped structure according to an embodiment of the present application;
FIG. 6 is a schematic diagram of a structural relationship of a supporting table in an apparatus for finely regulating welding deformation of a box-shaped structure according to an embodiment of the present application;
FIG. 7 is a schematic diagram of an assembly relationship between a first adjustment seat and a first adjustment cylinder in an apparatus for finely regulating welding deformation of a box-shaped structure according to an embodiment of the present application;
FIG. 8 is a schematic diagram of an assembly relationship between a second adjustment seat, a second adjustment cylinder and a pressing rod in an apparatus for finely regulating welding deformation of a box-shaped structure according to an embodiment of the present application;
FIG. 9 is a schematic diagram of an assembly relationship between a second adjustment seat, a second adjustment cylinder, a pressing rod, a pulling rod and a third adjustment cylinder in an apparatus for finely regulating welding deformation of a box-shaped structure according to an embodiment of the present application;
FIG. 10 is a schematic diagram of an arrangement relationship between a first sensing component, a second sensing component and a controller in an apparatus for finely regulating welding deformation of a box-shaped structure according to an embodiment of the present application;
FIG. 11 is a first schematic flowchart of a method for finely regulating welding deformation of a box-shaped structure according to an embodiment of the present application;
FIG. 12 is a second schematic flowchart of a method for finely regulating welding deformation of a box-shaped structure according to an embodiment of the present application;
FIG. 13 is a third schematic flowchart of a method for finely regulating welding deformation of a box-shaped structure according to an embodiment of the present application;
FIG. 14 is a fourth schematic flowchart of a method for finely regulating welding deformation of a box-shaped structure according to an embodiment of the present application;
FIG. 15 is a fifth schematic flowchart of a method for finely regulating welding deformation of a box-shaped structure according to an embodiment of the present application;
FIG. 16 is a sixth schematic flowchart of a method for finely regulating welding deformation of a box-shaped structure according to an embodiment of the present application; and
FIG. 17 a seventh schematic flowchart of a method for finely regulating welding deformation of a box-shaped structure according to an embodiment of the present application.

### Reference signs:

10, first welding surface; 20, second welding surface; 30, supporting table;
31, drive unit; 40, first adjustment seat; 41, first adjustment cylinder;
42, first sensing component; 50, second adjustment seat; 501 first panel;
502, second panel; 503, sliding block; 51, second adjustment cylinder;
52, pressing rod; 53, second sensing component; 54, slideway;
55, third adjustment cylinder; 56, pulling rod; 60, bolster beam;
61, through pipe; 62, first cover plate; 63, second cover plate;
70, fourth adjustment cylinder; 80, supporting rod.

### DETAILED DESCRIPTION OF THE EMBODIMENTS

In order to more clearly illustrate the solutions and advantages of the embodiments according to the present application, the solutions in the embodiments of the present application are clearly and completely described below in conjunction with the accompanying drawings in the embodiments of the present application. It should be noted that, the described embodiments are part of the embodiments of the present application, but not all of the embodiments. Based on the embodiments in this application, all other embodiments obtained by those of ordinary skill in the art without creative efforts fall within the scope of protection of this application.

In the description of the present application, it should be noted that, the orientation or positional relations specified by terms such as "central", "longitudinal", "lateral", "up", "down", "front", "back", "left", "right", "vertical", "horizontal", "top", "bottom", "inner", "outer" and the like, are based on the orientation or positional relations shown in the drawings, which is merely for convenience of description of the present application and to simplify description, but does not indicate or imply that the stated devices or components must have a particular orientation and be constructed and operated in a particular orientation, and thus it is not to be construed as limiting the present application. Furthermore, the terms "first", "second", "third" and the like are only used for descriptive purposes and should not be construed as indicating or implying a relative importance.

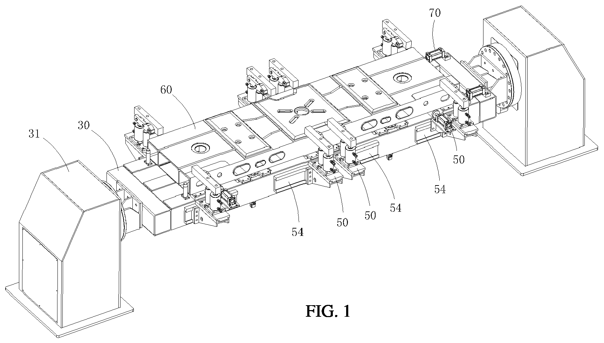

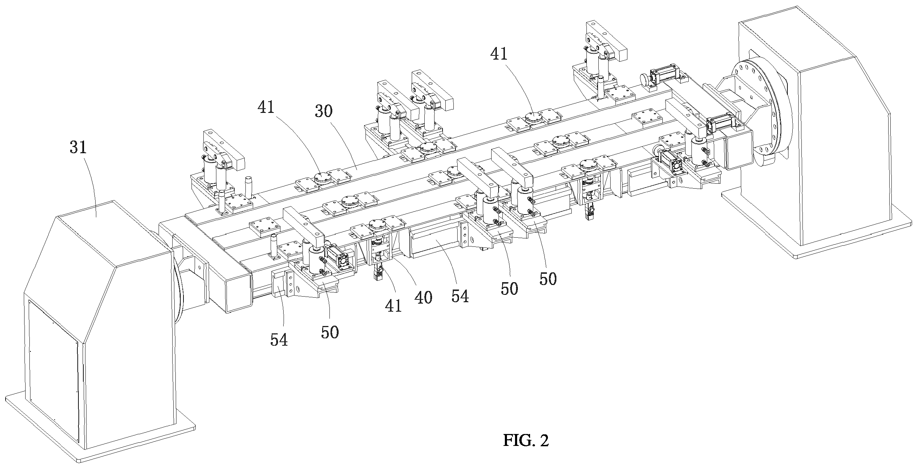

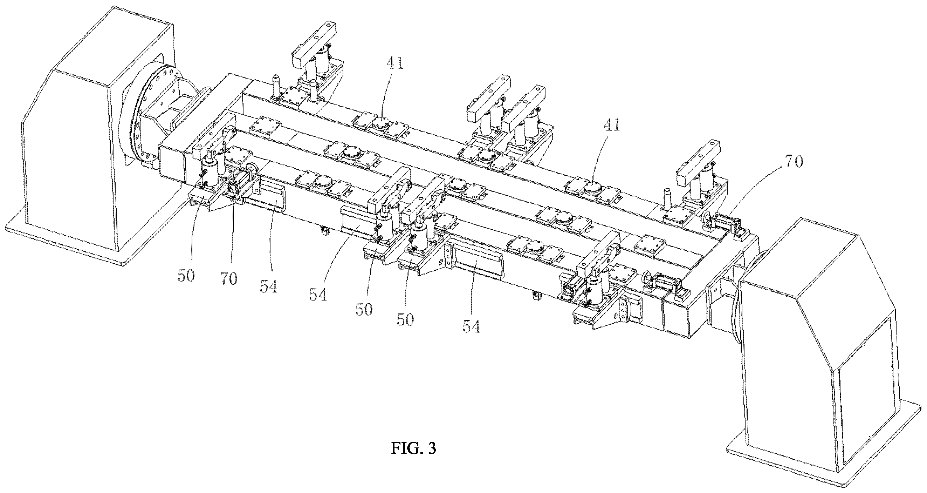

FIG. 1 to FIG. 3 show a first to a third schematic diagrams of an assembly relationship of an apparatus for finely regulating welding deformation of a box-shaped structure according to an embodiment of the present application. Part of the structure on a side of a supporting table 30 is omitted in FIG. 2 to conveniently observe a relative position of slideways 54 and second adjustment seats 50, as well as an arrangement of a first adjustment seat 40 inside the supporting table 30.

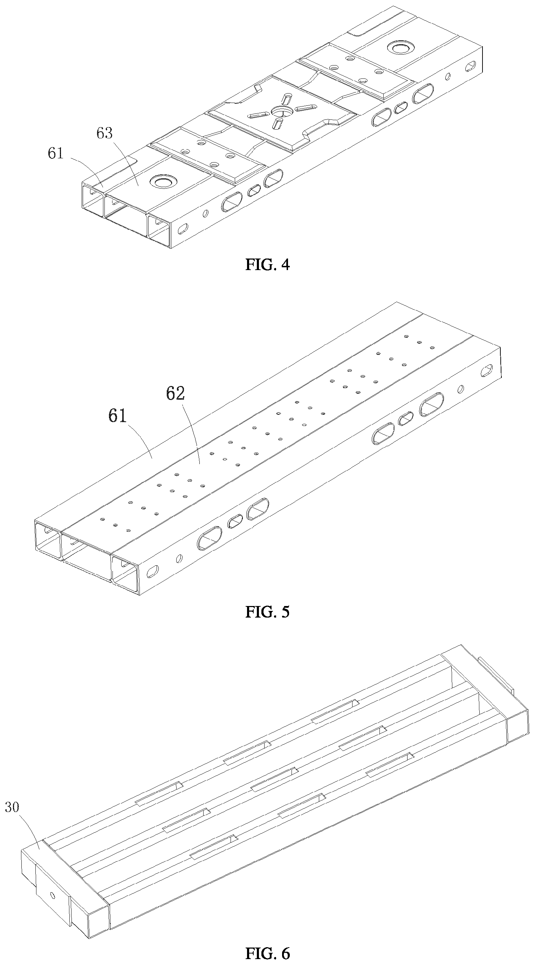

FIG. 4 and FIG. 5 show a first and a second schematic diagrams of an assembly relationship of a bolster beam 60 in an apparatus for finely regulating welding deformation of a box-shaped structure according to an embodiment of the present application, respectively. FIG.4 and FIG. 5 mainly show a structure of the bolster beam 60.

FIG. 6 is a schematic diagram of a structural relationship of a supporting table 30 in an apparatus for finely regulating welding deformation of a box-shaped structure according to an embodiment of the present application. FIG. 6 shows a structure of the supporting table 30.

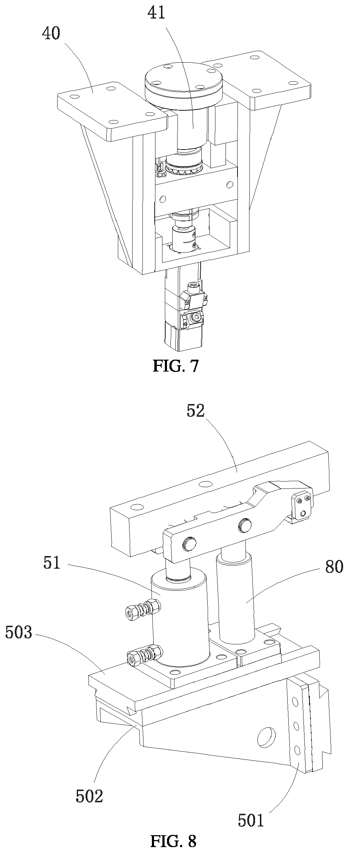

FIG. 7 is a schematic diagram of an assembly relationship between a first adjustment seat 40 and a first adjustment cylinder 41 in an apparatus for finely regulating welding deformation of a box-shaped structure according to an embodiment of the present application. FIG. 7 shows an arrangement of the first adjustment seat 40.

FIG. 8 is a schematic diagram of an assembly relationship between a second adjustment seat 50, a second adjustment cylinder 51 and a pressing rod 52 in an apparatus for finely regulating welding deformation of a box-shaped structure according to an embodiment of the present application. FIG. 8 also shows a solution of providing a supporting rod 80 on a sliding block 503, the pressing rod 52 rotates with a connection point with the supporting rod 80 as a rotation center, and further, the supporting rod 80 may also be configured as a telescopic rod with a telescopic function.

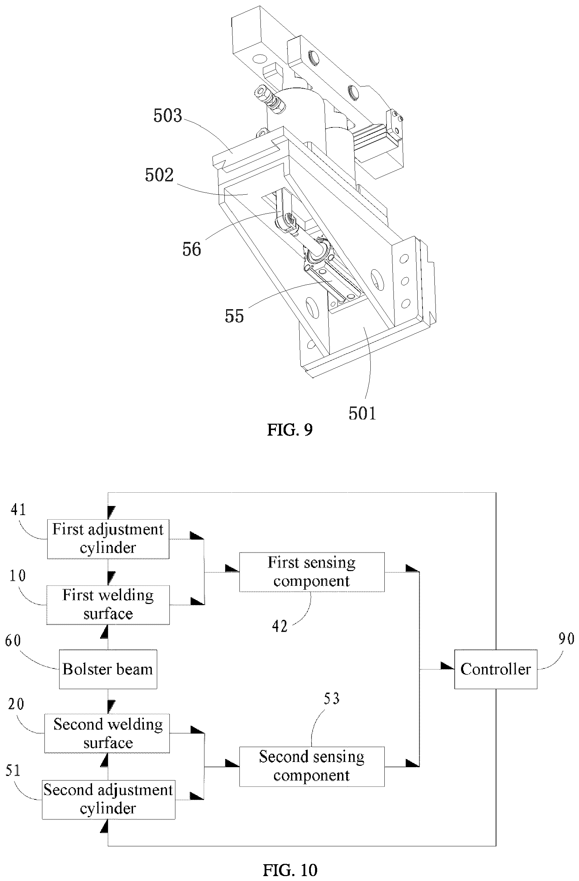

FIG. 9 is a schematic diagram of an assembly relationship between a second adjustment seat 50, a second adjustment cylinder 51, a pressing rod 52, a pulling rod 56 and a third adjustment cylinder 55 in an apparatus for finely regulating welding deformation of a box-shaped structure according to an embodiment of the present application. FIG.9 shows a structure of the second adjustment seat 50, and mainly shows an implementation of providing the third adjustment cylinder 55 inside the second adjustment seat 50. By providing the third adjustment cylinder 55, the pressing rod 52 may adjust a corresponding force applying position, and the third adjustment cylinder 55 drives the sliding block 503 to reciprocate.

FIG. 10 is a schematic diagram of an arrangement relationship between a first sensing component 42, a second sensing component 53 and a controller 90 in an apparatus for finely regulating welding deformation of a box-shaped structure according to an embodiment of the present application. FIG. 10 mainly shows a relative arrangement between the first sensing component 42, the second sensing component 53 and the controller 90.

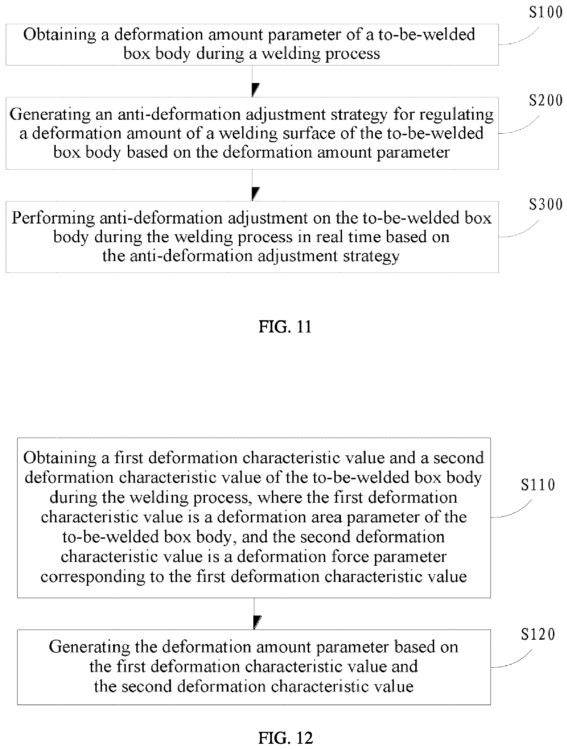

FIG. 11 is a first schematic flowchart of a method for finely regulating welding deformation of a box-shaped structure according to an embodiment of the present application. FIG. 11 includes steps S100, S200 and S300, which are as follows.

S100: obtaining a deformation amount parameter of a to-be-welded box body during a welding process.

An associated parameter of the to-be-welded box body during the welding process is obtained, and the associated parameter is converted into the deformation amount parameter to dynamically regulate a real-time flexibility of the to-be-welded box body during the welding process.

In an embodiment, the to-be-welded box body is the bolster beam 60.

In an embodiment, the to-be-welded box body mentioned in the present application may also be understood as other box-type structures that have a similar structure to a bolster beam, and also need to be welded on at least two opposite sides.

S200: generating an anti-deformation adjustment strategy for regulating a deformation amount of a welding surface of the to-be-welded box body based on the deformation amount parameter.

The anti-deformation adjustment strategy is a strategy that is updated in real time, and corresponds to the welding process of the to-be-welded box body. The anti-deformation adjustment strategy is updated in real time along with the welding process of the to-be-welded box body.

S300: performing anti-deformation adjustment on the to-be-welded box body during the welding process in real time based on the anti-deformation adjustment strategy.

In an embodiment, after the to-be-welded box body is adjusted based on the anti-deformation adjustment strategy, data of an adjustment portion is still collected in real time to conveniently regulating positioning of the adjustment portion to the to-be-welded box body and subsequent deformation problems caused by temperature drop.

In an embodiment, during the entire welding process of the to-be-welded box body, each adjustment portion is involved. As the welding position is adjusted, the adjustment portions within the welding range adjust the action force and/or force applying position based on the concentration of heat and stress.

FIG. 12 is a second schematic flowchart of a method for finely regulating welding deformation of a box-shaped structure according to an embodiment of the present application. FIG. 12 includes steps S110 and S 120, which are as follows.

S 110: obtaining a first deformation characteristic value and a second deformation characteristic value of the to-be-welded box body during the welding process, where the first deformation characteristic value is a deformation area parameter of the to-be-welded box body, and the second deformation characteristic value is a deformation force parameter corresponding to the first deformation characteristic value.

During the welding process, the welding positions of a first welding surface 10 and a second welding surface 20 have characteristics that heat and stress are more concentrated than the surrounding areas. Therefore, by obtaining the deformation area parameter and the deformation force parameter, the adjustment portion may correspondingly regulate based on the specific deformation force parameter of the deformation area parameter. For example, the deformation area parameter includes three adjustment portions, and the deformation force parameters corresponding to each adjustment portion are different, thus the action force applied by each adjustment portion is also different, and as the welding proceeds, the force applying position of each adjustment portion is also changed based on the specific deformation state of the first welding surface 10 and the second welding surface 20.

S120: generating the deformation amount parameter based on the first deformation characteristic value and the second deformation characteristic value.

The deformation amount parameter is obtained through the first deformation characteristic value and the second deformation characteristic value, which more accurately monitors the heat change area and stress concentration area of the bolster beam during the welding process, and also more accurately dynamically regulate the flexibility of the welding surface of the bolster beam 60 through the adjustment portion.

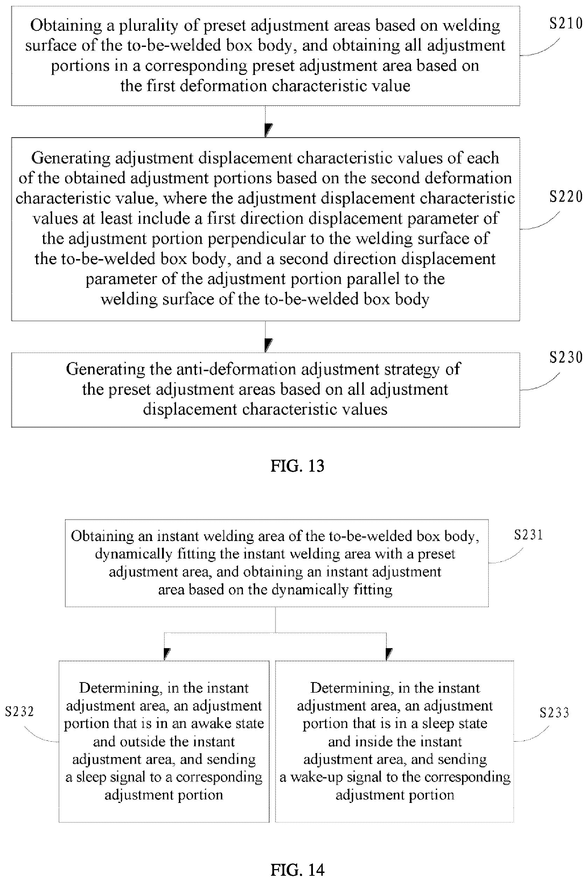

FIG. 13 is a third schematic flowchart of a method for finely regulating welding deformation of a box-shaped structure according to an embodiment of the present application. FIG. 13 includes steps S210, S220 and S230, which are as follows.

S210: obtaining a plurality of preset adjustment areas based on welding surface of the to-be-welded box body, and obtaining all adjustment portions in a corresponding preset adjustment area based on the first deformation characteristic value.

The adjustment portions may be set into a plurality of preset adjustment areas based on the distribution of the adjustment portions, the adjustment portions in each preset adjustment area may operate independently, and adjust the corresponding action force magnitude and/or force applying position under control of a controller 90.

S220: generating adjustment displacement characteristic values of each of the obtained adjustment portions based on the second deformation characteristic value, where the adjustment displacement characteristic values at least include a first direction displacement parameter of the adjustment portion perpendicular to the welding surface of the to-be-welded box body, and a second direction displacement parameter of the adjustment portion parallel to the welding surface of the to-be-welded box body.

The adjustment portion generates the adjustment displacement characteristic values based on the stress level corresponding to the force applying position. In a preset adjustment area, each adjustment portion may determine the first direction displacement parameter and the second direction displacement parameter based on the specific conditions of the bolster beam 60 in the preset adjustment area.

S230: generating the anti-deformation adjustment strategy of the preset adjustment areas based on all adjustment displacement characteristic values.

The anti-deformation adjustment strategy for regulating the deformation of the bolster beam 60 in the preset adjustment area is generated based on all adjustment displacement characteristic values generated by each adjustment portion within the preset adjustment area.

FIG. 14 is a fourth schematic flowchart of a method for finely regulating welding deformation of a box-shaped structure according to an embodiment of the present application. FIG. 14 includes steps S231, S232 and S233, which are as follows.

S231: obtaining an instant welding area of the to-be-welded box body, dynamically fitting the instant welding area with a preset adjustment area, and obtaining an instant adjustment area based on the dynamically fitting.

The welding process of the bolster beam 60 is changing, that is, as the welding gun moves, the deformation area of the bolster beam changes, so it is necessary to obtain the corresponding instant welding area.

Further, by fitting the instant welding area and the preset adjustment area, the instant adjustment area is obtained.

It should be noted that, the instant adjustment area changes dynamically corresponding to the welding process of the bolster beam 60.

S232: determining, in the instant adjustment area, an adjustment portion that is in an awake state and outside the instant adjustment area, and sending a sleep signal to a corresponding adjustment portion.

S233: determining, in the instant adjustment area, an adjustment portion that is in a sleep state and inside the instant adjustment area, and sending a wake-up signal to the corresponding adjustment portion.

In the above steps S232 and S233, since the welding position is relatively fixed during the welding process of the bolster beam 60, a single welding mechanism is generally used, and multiple welding mechanisms are used to perform a collaborative operation in some cases. However, whether it is single or collaborative welding, the deformation position on the bolster beam is dynamic. Therefore, it is necessary to form the instant adjustment area, and wake up the corresponding adjustment portion according to the instant adjustment area, so that the adjustment portion may perform corresponding regulation in the area where heat and stress are relatively concentrated.

It should be noted that, the adjustment portion that is not awakened or enters a sleep state from an awake state continues to support the bolster beam 60 based on a preset supporting force and the positioning of the bolster beam 60 is formed.

It should be noted that, the awake state mentioned in the present application corresponds to a state in which the adjustment portion performs flexible and dynamic adjustment based on the corresponding deformation of the welding surface, and the sleep state corresponds to a state where the deformation of the welding surface is small or has entered a stable state, and the adjustment portion only plays a supporting role.

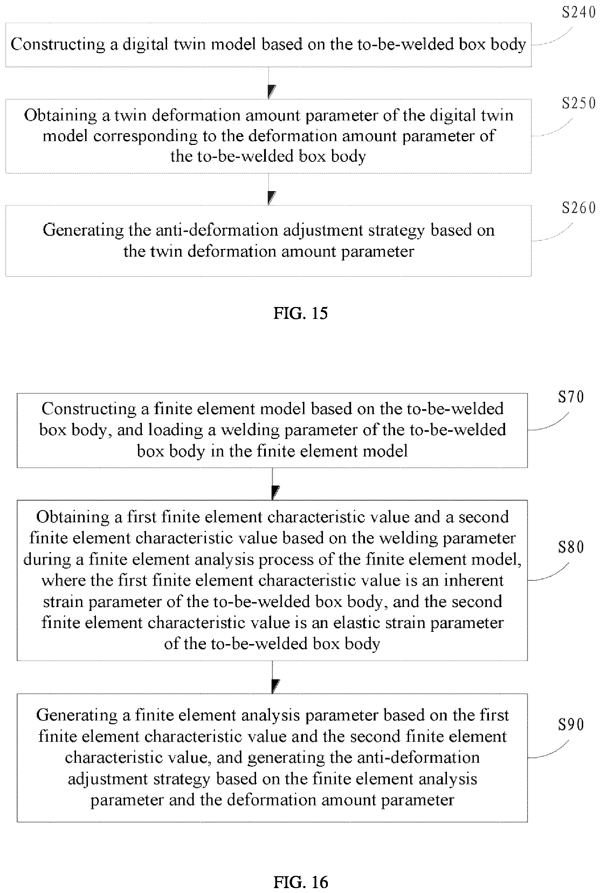

FIG. 15 is a fifth schematic flowchart of a method for finely regulating welding deformation of a box-shaped structure according to an embodiment of the present application. FIG. 15 includes steps S240, S250 and S260, which are as follows.

S240: constructing a digital twin model based on the to-be-welded box body.

The anti-deformation amount of the bolster beam 60 is calculated by constructing the digital twin model.

S250: obtaining a twin deformation amount parameter of the digital twin model corresponding to the deformation amount parameter of the to-be-welded box body.

The virtual digital twin model outputs the compression point, compression force, anti-deformation position, anti-deformation amount and welding process information set for each step of the bolster beam 60 as twin deformation amount parameter to adjust the assembly welding process in real time and enable refined regulation.

S260: generating the anti-deformation adjustment strategy based on the twin deformation amount parameter.

The anti-deformation adjustment strategy is generated based on the twin deformation amount parameter to flexibly and dynamically regulate the welding process of the bolster beam 60.

Further, a corresponding adjustment state may also be simulated in the digital twin model, an optimal adjustment scheme for the bolster beam may be obtained, and the anti-deformation adjustment strategy may be generated.

FIG. 16 is a sixth schematic flowchart of a method for finely regulating welding deformation of a box-shaped structure according to an embodiment of the present application. FIG. 16 includes steps S70, S80 and S90, which are as follows.

S70: constructing a finite element model based on the to-be-welded box body, and loading a welding parameter of the to-be-welded box body in the finite element model.

The specific model, size and related welding parameters, clamping parameters, etc. of the bolster beam 60 may be simulated in advance through the finite element model to obtain the simulation result, and set the corresponding clamps, the supporting force of the adjustment portion, etc. based on the simulation result. The adjustment scheme may also be set in advance, and comparison based on actual collected data may be performed to improve the work efficiency.

S80: obtaining a first finite element characteristic value and a second finite element characteristic value based on the welding parameter during a finite element analysis process of the finite element model, where the first finite element characteristic value is an inherent strain parameter of the to-be-welded box body, and the second finite element characteristic value is an elastic strain parameter of the to-be-welded box body.

The analysis result of the bolster beam 60 is closer to the real values by obtaining the inherent strain parameter and the elastic strain parameter in the finite element analysis.

Further, an environmental parameter and the like may also be set during the finite element analysis process to simulate the specific processing environment, current, voltage, etc. of the bolster beam 60, so that an obtained simulation result may be more accurate.

S90: generating a finite element analysis parameter based on the first finite element characteristic value and the second finite element characteristic value, and generating the anti-deformation adjustment strategy based on the finite element analysis parameter and the deformation amount parameter.

The anti-deformation adjustment strategy is generated through the first finite element characteristic value and the second finite element characteristic value.

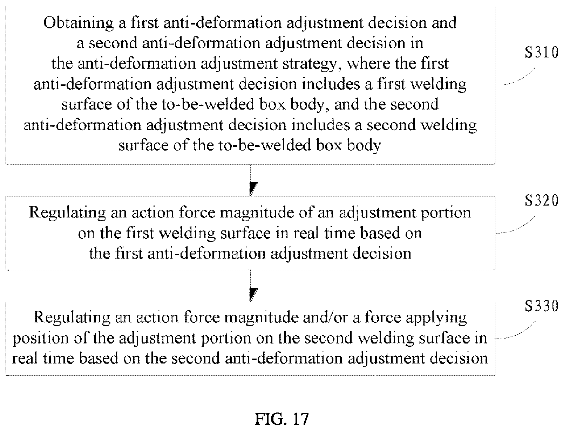

FIG. 17 a seventh schematic flowchart of a method for finely regulating welding deformation of a box-shaped structure according to an embodiment of the present application. FIG. 17 includes steps S310, S320 and S330, which are as follows.

S310: obtaining a first anti-deformation adjustment decision and a second anti-deformation adjustment decision in the anti-deformation adjustment strategy, where the first anti-deformation adjustment decision includes a first welding surface of the to-be-welded box body, and the second anti-deformation adjustment decision includes a second welding surface of the to-be-welded box body.

The first welding surface 10 and the second welding surface 20 are regulated respectively by obtaining the specific adjustment decision of the anti-deformation adjustment strategy.

It should be noted that, the setting here takes into account the difference between the first welding surface 10 and the second welding surface 20 due to the thickness and specific arrangement of the adjustment portion.

S320: regulating an action force magnitude of an adjustment portion on the first welding surface in real time based on the first anti-deformation adjustment decision.

The action force magnitude on the first welding surface 10 is flexibly and dynamically regulated through the first anti-deformation adjustment decision.

S330: regulating an action force magnitude and/or a force applying position of the adjustment portion on the second welding surface in real time based on the second anti-deformation adjustment decision.

The action force magnitude and/or the force applying position on the second welding surface 20 is flexibly and dynamically regulated through the second anti-deformation adjustment decision.

In the description of the embodiments of the present application, it should be noted that unless explicitly specified and defined otherwise, the terms "connected to" and "connected" shall be understood broadly, for example, it may be either fixedly connected or detachably connected, or can be integrated; it may be either mechanically connected, or electrically connected; it may be either directly connected, or indirectly connected through an intermediate medium. The specific meanings of the terms above in the present application can be understood by a person skilled in the art in accordance with specific conditions.

In the embodiments of the present application, unless otherwise expressly specified and defined, a first feature is "on" or "under" a second feature can refer to that the first feature is directly contacted with the second feature, or the first feature is indirectly contacted with the second feature through an intermediate medium. In addition, the first feature is "on", "above" and "over" the second feature can refer to that the first feature is directly above or obliquely above the second feature, or simply refer to that the level height of the first feature is higher than that of the second feature. A first feature is "under", "below" and "beneath" a second feature can refer to that the first feature is directly below or obliquely below the second feature, or simply refer to that the level height of the first feature is lower than that of the second feature.

In some embodiments of the present application, as shown in FIG. 1 to FIG. 10, an apparatus for regulating welding deformation of a box-shaped structure is provided, including: a supporting portion and an adjustment portion; the supporting portion is formed with a supporting surface that supports a to-be-welded box body; the adjustment portion is connected to the supporting portion, and at least abuts against a welding surface of the to-be-welded box body; during a welding process, the adjustment portion regulates a flatness of the to-be-welded box body by adjusting action force magnitude and/or a force application position on the welding surface of the to-be-welded box body.

The present application provides an apparatus and the method for regulating welding deformation of a box-shaped structure, which solves the problems in related art that the bolster beam structure cannot be eliminated from post-weld repair, the welding deformation cannot be effectively suppressed, the workload of repeated verification is large, accurate and dynamic adjustment cannot be made based on the evolution trend and change amount of deformation of the welded structure, and the anti-deformation effect is poor. By providing multi-point flexible supports on the box-shaped structure of the bolster beam 60, during the welding process, the positions and action force magnitude of positioning supports and rigid constraint points in each work step of the box-shaped structure of the bolster beam 60, the anti-deformation position and the anti-deformation amount are output in real time and quantitatively. The manufacturing accuracy and stress distribution of the box-shaped structure of the bolster beam 60 during the welding process are monitored in three-dimension, dynamically and in real time, and the refined regulation in real time and step by step is formed, thereby the manufacturing accuracy of the bolster beam 60 is improved, the post-weld repair of the box-shaped structure of the bolster beam is eliminated, the manufacturing cost is reduced, and the production efficiency is greatly improved.

In an embodiment, the to-be-welded box body at least includes: a first welding surface 10 and a second welding surface 20; the first welding surface is a surface of the to-be-welded box body proximal to the supporting surface; the second welding surface 20 is a surface of the to-be-welded box body distal to the first welding surface 10.

The present embodiment provides an implementation of the to-be-welded box body. By providing the first welding surface 10 and the second welding surface 20 on the to-be-welded box body, and constraining the relative positions between the first welding surface 10, the second welding surface 20 and the supporting surface, the first welding surface 10 and the second welding surface 20 may be adjusted respectively by the adjustment portion during the welding process of the to-be-welded box body. The concentration of heat and stress on the first welding surface 10 and the second welding surface 20 during welding, which results in structural damage, large deformation and the existence of manufacturing errors, is avoided. At the same time, the post-weld repair of the box-shaped structure of the bolster beam is eliminated, the manufacturing cost is reduced, and the production efficiency is greatly improved.

It should be noted that, the supporting portion forms the supporting surface of the to-be-welded box body. The supporting surface may be a physical supporting surface formed by a specific structure of a supporting portion surface. The physical supporting surface refers to the contact surface of the supporting portion with the to-be-welded box body, and the to-be-welded box body is completely supported by the surface structure of the supporting portion. The physical supporting surface may also be a physical supporting surface formed by adopting hollow structures and the like on the surface of the supporting surface. The physical supporting surface may be the plane where a matched surface of the to-be-welded box body and the supporting portion is located. The supporting portion may partially support the to-be-welded box body in this plane, and a complete surface contact is not necessary.

In an embodiment, the first welding surface 10 and the second welding surface 20 refer to two opposite planes of the to-be-welded box body. A large amount of welding is required on the two opposite planes of the to-be-welded box body. The concentration of heat and stress caused by welding causes deformation of the first welding surface 10 and the second welding surface 20.

In an embodiment, the first welding surface 10 and the second welding surface 20 refer to a part of welding joints in two opposite planes of the to-be-welded box body.

In an embodiment, a thickness of at least part of the first welding surface 10 of the to-be-welded box body is smaller than a thickness of part of the second welding surface 20.

The present embodiment provides an implementation of the first welding surface 10 and the second welding surface 20. Since the to-be-welded box body has an area in which the thickness of the first welding surface 10 is smaller than the thickness of the second welding surface 20, the overall deformation amount of the to-be-welded box body in the first welding surface 10 may be greater than the second welding surface 20. Therefore, the first welding surface 10 is provided on a side proximal to the supporting table 30. Through the overall supporting effect of the supporting table 30 on the first welding surface 10, the first welding surface 10 is prevented from overall and large deformation during the welding process. The supporting table 30 plays an anti-deformation role on the first welding surface 10.

In an embodiment, the to-be-welded box body is a bolster beam 60 of a rail vehicle.

In an embodiment, a number of welding layers and passes arranged on the first welding surface 10 is smaller than a number of welding layers and passes arranged on the second welding surface 20. In practical applications, due to the particular structure of the bolster beam 60, the first welding surface 10 and the second welding surface 20 of the bolster beam 60 have different thickness and number of welding layers and passes. The thickness and number of welding layers and passes of the second welding surface 20 are generally larger than that of the first welding surface 10. Although the second welding surface 20 has a larger thickness and the overall deformation during the welding process is smaller than that of the first welding surface 10. However, since the second welding surface 20 has more welding layers and passes, the stress near the welding seam is more concentrated and the deformation near the welding seam is more severe, the second welding surface 20 needs to be set on a side away from the supporting table 30, and flexible support and dynamic adjustment need to be performed by the adjustment portion to allow the anti-deformation regulation of the welding seam on the second welding surface 20 during the welding process, reduce the deformation amount of the bolster beam 60, improve the flatness of the bolster beam 60, and improve the manufacturing accuracy of the bolster beam 60.

In an embodiment, the supporting portion includes: a supporting table 30 and a drive unit 31; a surface of the supporting table 30 forms the supporting surface; the drive unit 31 is connected to the supporting table 30 and is used to adjust a rotation angle of the supporting table 30 to conveniently weld the first welding surface 10 and the second welding surface 20; where the supporting table 30 is provided with multiple gaps that at least correspond to to-be-welded positions of the first welding surface 10.

The present embodiment provides an implementation of the supporting portion. The supporting table 30 is turned over through the drive unit 31, and the first welding surface 10 and the second welding surface 20 are welded through the welding mechanism.

It should be noted that, a traditional bolster beam 60 is welded using a single welding mechanism, that is, through a single welding gun. During the welding process of the bolster beam 60, there is a problem that manual turning, repeated positioning and clamping are required, and it is difficult to clamp and mold at one time, which affects the processing accuracy of the bolster beam 60 and increases the labor intensity. There is a situation in the traditional solution that the bolster beam 60 has a single support, and under a single welding deformation suppression measure, the post-weld manufacturing accuracy of the box-shaped bolster beam 60 still does not meet the standard that free from repair.

It should also be noted that, the present application does not limit the specific structure of the drive unit 31. The drive unit 31 includes a motor, a bearing, a supporting mechanism, a transmission mechanism, etc. In order to save space, the present application does not elaborate on the specific structure of the drive unit 31. In practical applications, those skilled in the art may refer to settings in related fields according to actual conditions.

In an embodiment, since the bolster beam 60 is provided behind the supporting table 30 in the present application, the first welding surface 10 of the bolster beam 60 is in contact with the supporting table 30, and the second welding surface 20 is on an opposite side, the welding of the second welding surface 20 may be performed directly, but for the welding of the first welding surface 10, the supporting table 30 needs to be turned over by the drive unit 31. The supporting table 30 is provided with multiple gaps, and the gaps correspond to the welding seams of the bolster beam 60 on the first welding surface 10, as a result, the welding mechanism may weld the first welding surface 10 of the bolster beam 60 through the gaps. The supporting table 30 may also play an anti-deformation role by contacting with the surface of the first welding surface 10, which avoids the problem that the first welding surface 10 of the bolster beam is excessively deformed due to the concentration of heat and stress during the welding process, and the post-weld bolster beam 60 needs to be repaired.

In an embodiment, the adjustment portion includes: a plurality of first adjustment seats 40, a first adjustment cylinder 41 and a first sensing component 42; the plurality of the first adjustment seats 40 are connected to the supporting table 30; an end of the first adjustment cylinder 41 is provided on the first adjustment seat 40, and another end of the first adjustment cylinder 41 abuts against the first welding surface 10; the first sensing component 42 is at least connected to the first adjustment cylinder 41; where during the welding process, a stroke of the first adjustment cylinder 41 is adjusted based on a parameter fed back by the first sensing component 42 to adjust action force magnitude on the first welding surface 10.

The present embodiment provides an implementation of the adjustment portion that is provided on the supporting table 30. By providing the first adjustment seats 40 and the first adjustment cylinder 41, the first welding surface 10 is flexibly supported from the side of the supporting table 30. The arrangement of the first sensing component 42 enables the first adjustment cylinder 41 to adjust the flexible supporting force based on relevant parameters during the welding process, and the supporting force is dynamically adjusted based on the real-time parameter of the first welding surface 10 where the first adjustment cylinder 41 is located.

It should be noted that, the present application does not limit the specific structure of the first adjustment seats 40, and the first adjustment seats 40 may be set according to actual conditions.

In an embodiment, the first adjustment seats 40 are provided inside the supporting table 30, and a passage through which for the first adjustment cylinder 41 extends is provided on the surface of the supporting table 30.

In an embodiment, the first adjustment seats 40 are provided on the other side of the supporting table 30 relative to the bolster beam 60, and a channel for the first adjustment cylinder 41 to extend is provided on the surface of the supporting table 30.

In an embodiment, the first adjustment cylinder 41 is a pneumatic cylinder. The present application also includes corresponding pneumatic mechanisms connected to the first adjustment cylinder 41, such as air sources, air pumps and air pipelines, etc. to adjust the action force magnitude of the first adjustment cylinder 41 on the first welding surface 10 through telescopic adjustment.

In an embodiment, the first adjustment cylinder 41 is a hydraulic cylinder. The apparatus further includes corresponding hydraulic mechanisms connected to the first adjustment cylinder 41, such as oil tanks, oil pumps and pipelines, etc. to adjust the action force magnitude of the first adjustment cylinder 41 on the first welding surface 10 through telescopic adjustment.

In an embodiment, the first adjustment cylinder 41 is an electric cylinder. The apparatus further includes corresponding electric mechanisms connected to the first adjustment cylinder 41, such as motors, power supplies and control boards, etc. to adjust the action force magnitude of the first adjustment cylinder 41 on the first welding surface 10 through telescopic adjustment.

In an embodiment, the first sensing component 42 includes a first displacement sensor, where the first displacement sensor is connected to the first adjustment cylinder 41 and used to detect the stroke of the first adjustment cylinder 41 and feedback a stroke parameter of the first adjustment cylinder 41 to a controller 90. The controller 90 may more accurately regulate the action force between the first adjustment cylinder 41 and the first welding surface 10 through the stroke data fed back by the first displacement sensor.

In an embodiment, the first sensing component 42 includes a first stress sensor, where the first stress sensor is provided at a front end of the first adjustment cylinder 41 and abuts against the first welding surface 10 to measure action force parameters between the first welding surface 10 and the first adjustment cylinder 41 and feedback the action force data to the controller 90. During the welding process, the first welding surface 10 is deformed, and the action force magnitude between the first welding surface 10 and the first adjustment cylinder 41 changes. The controller 90 determines based on the action force parameters and a preset mechanical model, adjusts the stroke of the first adjustment cylinder 41, and thereby adjusts the action force magnitude on the first welding surface 10.

In an embodiment, the first sensing component 42 includes a first temperature sensor, where the first temperature sensor is provided at a front end of the first adjustment cylinder 41 and abuts against the first welding surface 10 to measure temperature parameters of the first welding surface 10 and simultaneously feedback the temperature data of the first welding surface 10 to the controller 90. The controller 90 determines based on the temperature parameters and a preset temperature model, regulates the action force magnitude applied to the first welding surface 10, and simultaneously cooperates with an adjacent first adjustment cylinder 41 to cooperate based on a temperature field fed back by the first temperature sensor, thereby a flexible support that regulates the manufacturing accuracy of the first welding surface 10 is formed.

In an embodiment, the first sensing component 42 includes a first image sensor, where the first image sensor is connected to the first adjustment cylinder 41, and may be provided at a front end of the first adjustment cylinder 41 based on actual needs. The first image sensor is used to collect three-dimensional topography parameters of the first welding surface 10 during the welding process, and transmit them to the controller 90. The controller 90 determines the changes in the three-dimensional topography of the first welding surface 10 during the welding process, and regulates the first adjustment cylinder 41 accordingly based on the determination results. In addition, adjacent first adjustment cylinders 41 may also be used to form an anti-deformation adjustment area to regulate the first welding surface 10 and improve the processing accuracy of the bolster beam 60.

In an embodiment, the adjustment portion includes: second adjustment seats 50, a second adjustment cylinder 51, a pressing rod 52 and a second sensing component 53; a plurality of the second adjustment seats 50 are provided on a side portion of the supporting table 30; an end of the second adjustment cylinder 51 is connected to the second adjustment seats 50, another end of the second adjustment cylinder 51 is connected to the pressing rod 52, and the second adjustment cylinder 51 is provided vertically; another end of the pressing rod 52 opposite to the second adjustment cylinder 51 abuts against the second welding surface 20; the second sensing component 53 is at least connected to the pressing rod 52; where during the welding process, the second adjustment cylinder 51 adjusts a stroke of the second adjustment cylinder 51 based on a parameter fed back by the second sensing component 53 to adjust action force magnitude of the pressing rod 52 on the second welding surface 20.

The present embodiment provides an implementation of the adjustment portion that is provided on a side portion of the supporting table 30. By the arrangement of the second adjustment seats 50, the second adjustment cylinder 51 and the pressing rod 52, the second welding surface 20 is regulated. The pressing rod 52 adjusts the corresponding force applying position and/or action force magnitude under the action of the second adjustment cylinder 51 to enable the flexible support. The arrangement of the second sensing component 53 allows the pressing rod 52 to adjust the flexible supporting force based on relevant parameters during the welding process. The dynamic adjustment is enabled based on the real-time parameters of the second welding surface where the pressing rod 52 is located.

It should be noted that, the present application does not limit the specific structure of the second adjustment seats 50, and the second adjustment seats 50 may be set based on actual conditions.

It should also be noted that, a lever-like structure is provided between the second adjustment cylinder 51 and the pressing rod 52. When the second adjustment cylinder 51 operates, the pressing rod 52 rotates around a connection point to adjust the action force magnitude applied to the second welding surface 20.

In an embodiment, each of the second adjustment seats 50 is provided with a supporting rod 80 that is spaced apart from the second adjustment cylinder 51. The supporting rod 80 is connected to the pressing rod 52, and the connection between the supporting rod 80 and the pressing rod 52constitutes a center of rotation of the pressing rod 52. The pressing rod 52 rotates around the connection position with the supporting rod 80 to adjust the action force magnitude applied on the second welding surface 20.

In an embodiment, the supporting rod 80 is any telescopic rod structure among electric rods, pneumatic rods and hydraulic rods. The supporting rod 80 cooperates with the second adjustment cylinder 51 to adjust the action force magnitude applied on the second welding surface 20.

In an embodiment, the second adjustment seat 50 is provided at a side portion of the supporting table 30. The second adjustment cylinder 51 is connected to the second adjustment seat 50 and located above the supporting table 30, and applies force on the second welding surface 20 through the pressing rod 52.

In an embodiment, the second adjustment seat 50 is provided on the other side of the supporting table relative to the bolster beam 60. The second adjustment cylinder 51 is located above the supporting table 30 through a corresponding transfer structure, and applies force on the second welding surface 20 through the pressing rod 52.

In an embodiment, the second adjustment cylinder 51 is a pneumatic cylinder. The apparatus further includes corresponding pneumatic mechanisms connected to the second adjustment cylinder 51, such as air sources, air pumps and air pipelines, etc. to adjust the action force magnitude of the second adjustment cylinder 51 on the second welding surface 20 through telescopic adjustment.

In an embodiment, the second adjustment cylinder 51 is a hydraulic cylinder. The apparatus further includes corresponding hydraulic mechanisms connected to the second regulating cylinder 51, such as oil tanks, oil pumps and pipelines, etc. to adjust the action force magnitude of the second adjustment cylinder 51 on the second welding surface 20 through telescopic adjustment.

In an embodiment, the second adjustment cylinder 51 is an electric cylinder. The apparatus further includes corresponding electric mechanisms connected to the second regulating cylinder 51, such as motors, power supplies and control boards, etc. to adjust the action force magnitude of the second adjustment cylinder 51 on the second welding surface 20 through telescopic adjustment.

In an embodiment, the second sensing component 53 includes a second displacement sensor, where the second displacement sensor is connected to the second adjustment cylinder 51 and used to detect the stroke of the second adjustment cylinder 41 and feedback a stroke parameter of the second adjustment cylinder 51 to the controller 90. The controller 90 may more accurately regulate the action force between the pressing rod 52 and the second welding surface 20 through the stroke data fed back by the second displacement sensor.

In an embodiment, the second sensing component 53 includes a second stress sensor, where the second stress sensor is provided at a front end of the pressing rod 52 and abuts against the second welding surface 20 to measure action force parameters between the second welding surface 20 and the pressing rod 52 and feedback the action force data to the controller 90. During the welding process, the second welding surface 20 is deformed, and the action force magnitude between the second welding surface 20 and the pressing rod 52 changes. The controller 90 determines based on the feedback force parameters and a preset mechanical model, adjusts the stroke of the second adjustment cylinder 51, and thereby adjusts the action force magnitude of the pressing rod 52 on the second welding surface 20.

In an embodiment, the second sensing component 53 includes a second temperature sensor, where the second temperature sensor is provided at a front end of the pressing rod 52 and abuts against the second welding surface 20 to measure temperature parameters of the second welding surface 20 and simultaneously feedback the temperature parameters of the second welding surface 20 to the controller 90. The controller 90 determines based on the temperature parameters and a preset temperature model, regulates the action force magnitude applied to the second welding surface 20, and simultaneously cooperates with an adjacent second adjustment cylinder 51 to cooperate based on a temperature field fed back by the second temperature sensor, and a flexible supporting that regulates the manufacturing accuracy of the second welding surface 20 is formed.

In an embodiment, the second sensing component 53 includes a second image sensor, where the second image sensor is connected to the pressing rod 52, and may be provided at a front end of the pressing rod 52 based on actual needs. The second image sensor is used to collect three-dimensional topography parameters of the second welding surface 20 during the welding process, and transmit them to the controller 90. The controller 90 determines the changes in the three-dimensional topography of the second welding surface 20 during the welding process, and regulates the second adjustment cylinder 51 accordingly based on the determination results. In addition, adjacent second adjustment cylinders 51 may also be used to form an anti-deformation adjustment area to regulate the second welding surface 20 and improve the processing accuracy of the bolster beam 60.

In an embodiment, the adjustment portion further includes: slideways 54, a plurality of the slideways 54 are provided on a side portion of the supporting table 30, and the second adjustment seats 50 are slidingly matched with the slideways 54; where during the welding process, the second adjustment seats 50 slide along an extension direction of the slideways 54 based on the parameter fed back by the second sensing component 53 to adjust the force applying position of the pressing rod 52 on the second welding surface 20.

The present embodiment provides an implementation of providing the slideways 54 on the side portion of the supporting table 30. By providing the slideways 54, the corresponding second adjustment seats 50 may slide along the side portion of the supporting table 30. During the welding process, the force applying position of the pressing rod 52 on the second welding surface 20 may be adjusted within a certain range, so that one pressing rod 52 may form one adjustment area for the anti-deformation amount and perform coordinated regulation with the adjacent pressing rod 52 to cope with various deformation situations occurring on the second welding surface 20 during the welding process.

In an embodiment, the second adjustment seats 50 and the slideways 54 are electronically controlled linear motion modules and are respectively connected to the controller 90.

In an embodiment, the bottom of the second adjustment seats 50 are provided with a structure such as a sliding block and the like that matches with the slideway 54. The sliding block and the slideways 54 are respectively sub-components of the linear motion module.

In an embodiment, electrically controlled adjustment is enabled between the second adjustment seat 50 and the slideway 54 through transmission manners such as magnetic induction, screw, conveyor belt, etc.

In an embodiment, a plurality of fourth adjustment cylinders 70 are provided on the side portion of the supporting table 30, where the fourth adjustment cylinders 70 abut against the side portion of the bolster beam 60 and is used to position the bolster beam 60 and avoid displacement for the bolster beam 60 during the welding process.

In an embodiment, while the fourth adjustment cylinder 70 is connected to the controller 90, the fourth adjustment cylinder 70 is further slidingly connected to the slideways 54, and may be movable along the extension direction of the slideway 54 to flexibly and dynamically support the side portion of the supporting table 30.

In an embodiment, the second adjustment seat 50 includes: a first panel 501, a second panel 502 and a sliding block 503; the first panel 501 is connected to the side portion of the supporting table 30; the second panel 502 is connected to the first panel 501 to form an L-shaped structure; the sliding block 503 is slidingly provided on the second panel 502; the second adjustment cylinder 51 is connected to the sliding block 503; the adjustment portion further includes: a third adjustment cylinder 55 and a pulling rod 56; the third adjustment cylinder 55 is provided on another surface of the first panel 501 opposite to the side portion of the supporting table 30; an end of the pulling rod 56 is connected to the third adjustment cylinder 55, another end of the pulling rod 56 passes through an opening slot on the second panel 502 and is connected to the sliding block 503.

The present embodiment provides an implementation of adjusting the force applying position of the pressing rod 52 on the second welding surface 20. Through providing the specific structure of the second adjustment seat 50, as well as the structure of the third adjustment cylinder 55 and the pulling rod 56, the pressing rod 52 may adjust the force applying position on the second welding surface 20 through the pulling rod 56 and the third adjustment cylinder 55.

Further, by providing the first panel 501, the second panel 502 and the sliding block 503 of the second adjustment seat 50, while the third adjustment cylinder 55 is connected to the pressing rod 52, the occupation space is minimized, and the overall structure is more compact.

In an embodiment, the third adjustment cylinder 55 is any one or a combination of pneumatic, hydraulic and electric telescopic rods, and the third adjustment cylinder 55 is provided with relevant control mechanisms and pipelines. In practical applications, the specific settings of the third adjustment cylinder 55 may refer to the relevant settings of the first adjustment cylinder 41 and the second adjustment cylinder 51 in the present application.

In an embodiment, the second sensing component 53 includes a third displacement sensor connected to the third adjustment cylinder 55, where the third displacement sensor is used to detect the stroke of the third adjustment cylinder 55 and feedbacks the stroke to the controller 90. The controller 90 regulates the entire system based on the stroke parameter fed back by the third displacement sensor.

In an embodiment, the pressing rod 52 is a rod-shaped structure capable of adjusting the telescopic length. During the welding process, the pressing rod 52 adjusts the telescopic length based on the parameter fed back by the second sensing component 53 to adjust the force applying position on the second welding surface 20.

The present embodiment provides an implementation of the pressing rod 52. By providing the pressing rod 52 as a telescopic rod with adjustable length, the force applying position of the pressing rod 52 on the second welding surface 20 may be adjusted by adjusting the telescopic length of the pressing rod 52.

In an embodiment, the pressing rod 52 is any one or a combination of pneumatic, hydraulic and electric telescopic rods, and the pressing rod 52 is provided with relevant control mechanisms and pipelines. In practical applications, the specific settings of the pressing rod 52 may refer to the relevant settings of the first adjustment cylinder 41 and the second adjustment cylinder 51 in the present application.

In an embodiment, the second sensing component 53 includes a fourth displacement sensor connected to the pressing rod 52, where the fourth displacement sensor is used to detect the stroke parameter of the pressing rod 52 and feedbacks the stroke parameter to the controller 90. The controller 90 regulates the entire system based on the stroke parameter fed back by the fourth displacement sensor.

In an embodiment, the to-be-welded box body is a bolster beam 60; the bolster beam at least includes: two through pipes 61, a first cover plate 62 and a second cover plate 63; two through pipes 61 are provided at intervals; the first cover plate 62 is in the first welding surface 10, and is connected to the two through pipes 61 respectively. The second cover plate 63 is in the second welding surface 20, and is connected to the two through pipes 61 respectively; where at least a thickness of the first cover plate 62 is smaller than a thickness of the second cover plate 63.

The present embodiment provides an implementation of the to-be-welded box body which is the bolster beam 60. The bolster beam 60 includes structures of the though pipes 61, the first cover plate 62, the second cover plate 64, etc. In practical applications, the bolster beam 60 also includes corresponding reinforcing ribs, lining plates and other structures that serve as reinforcements and connections. In the present embodiment, only the through pipes 61, the first cover plate 62 and the second cover plate 63 are provided and shown, but it does not mean that the bolster beam 60 only includes the above-mentioned structures.

In an embodiment, the thickness of the first cover plate 62 is smaller than the thickness of the second cover plate 63.

In an embodiment, the thickness of the through pipes 61 on the side corresponding to the first cover plate 62 is smaller than the thickness of the through pipes 61 on the side corresponding to the second cover plate 63.

In an embodiment, during the welding process of the bolster beam 60, due to the concentration of heat and stress, the first cover plate 62, the second cover plate 63 and the through pipe 61 are deformed. In the present embodiment, the flexibly supported adjustment portions are provided on the first welding surface 10 and the second welding surface 20 of the bolster beam 60 to output the anti-deformation force on the first welding surface 10 and the second welding surface 20 of the bolster beam 60 during the welding process in real time and quantitively. By the corresponding force applying position, the deformation for the bolster beam 60 during the welding process is regulated in real time and finely. The manufacturing accuracy of the bolster beam 60 is improved, the post-weld repair of the box-shaped structure of the bolster beam 60 is eliminated, the manufacturing cost is reduced, and the production efficiency is greatly improved.

In an embodiment, supporting points formed by the first adjustment cylinder 41 on the first welding surface 10 of the bolster beam 60 are spaced apart to form 3 rows and 5 columns, with a total of 15 flexible adjustment points.

In an embodiment, supporting points formed by the first adjustment cylinder 41 on the second welding surface 20 of the bolster beam 60 are spaced apart to form 2 rows and 4 columns, with a total of 8 flexible adjustment points.

In embodiments of the present application, as shown in FIG.1 to FIG. 17, a regulating method based on the above-mentioned apparatus for regulating welding deformation of the box-shaped structure is provided, including:
obtaining a deformation amount parameter of a to-be-welded box body during a welding process;
generating an anti-deformation adjustment strategy for regulating a deformation amount of a welding surface of the to-be-welded box body based on the deformation amount parameter; and
performing anti-deformation adjustment on the to-be-welded box body during the welding process in real time based on the anti-deformation adjustment strategy.

The present application further provide a method for finely regulating welding deformation of a box-shaped structure, which solves the problems in related art that the structure of bolster beam 60 cannot be eliminated from post-weld repair, the welding deformation cannot be effectively suppressed, the workload of repeated verification is large, accurate and dynamic adjustment cannot be made based on the deformation evolution trend and change amount of the welded structure, and the anti-deformation effect is poor. By constructing a mathematical model for the box-shaped structure of bolster beam 60, multi-point flexible supports, dynamical digital compression, and continuously-adjustable position adjustments for the box-shaped structure of the bolster beam 60 is enabled, the manufacturing accuracy and stress distribution of the box-shaped structure of the bolster beam 60 during the welding process are monitored in three-dimension, dynamically and in real time, the fine regulation in real time and step by step is formed, the positions and force magnitude of positioning support and rigid constraint points in each work step of the box-shaped structure of the bolster beam 60, the anti-deformation position, and the anti-deformation amount of the box-shaped structure of the bolster beam 60 are output in real time and quantitatively, the manufacturing accuracy of the bolster beam 60 is improved, the post-weld repair of the box-shaped structure of the bolster beam 60 is eliminated, the manufacturing cost is reduced, and the production efficiency is greatly improved.

In an embodiment, obtaining the deformation amount parameter of the to-be-welded box body during the welding process includes:
obtaining a first deformation characteristic value and a second deformation characteristic value of the to-be-welded box body during the welding process, where the first deformation characteristic value is a deformation area parameter of the to-be-welded box body, and the second deformation characteristic value is a deformation force parameter corresponding to the first deformation characteristic value; and
generating the deformation amount parameter based on the first deformation characteristic value and the second deformation characteristic value.

The present embodiment provides an implementation of obtaining the deformation amount parameter of the to-be-welded box body during the welding process. The corresponding deformation parameter is generated based on the deformation area and deformation force of the bolster beam 60 during the welding process.

It should be noted that, the deformation of both the first welding surface 10 and the second welding surface 20 is dynamic during the welding process, thus the anti-deformation force applied by the adjustment portion on the first welding surface 10 and the second welding surface as well as the corresponding force applying position need to be flexibly and dynamically adjusted.

In an embodiment, generating the anti-deformation adjustment strategy for regulating the deformation amount of the welding surface of the to-be-welded box body based on the deformation amount parameter includes:
obtaining a plurality of preset adjustment areas based on the welding surface of the to-be-welded box body, and obtaining all adjustment portions in a corresponding preset adjustment area based on the first deformation characteristic value;
generating adjustment displacement characteristic values of each of the obtained adjustment portions based on the second deformation characteristic value, where the adjustment displacement characteristic values at least include a first direction displacement parameter of the adjustment portion perpendicular to the welding surface of the to-be-welded box body, and a second direction displacement parameter of the adjustment portion parallel to the welding surface of the to-be-welded box body; and
generating the anti-deformation adjustment strategy of the preset adjustment areas based on all of the adjustment displacement characteristic values.

The present embodiment provides an implementation of generating the anti-deformation adjustment strategy for regulating a flatness of the to-be-welded box body based on the deformation amount parameter. By obtaining the deformation area corresponding to the welding position on the first welding surface 10 and the second welding surface 20, and matching with the preset adjustment area, the flexible support is enabled, and the regulation is more accurate.

It should be noted that, among all the preset adjustment areas, other preset adjustment areas that do not correspond to the first deformation characteristic value of the bolster beam 60 still provide corresponding preset support to the bolster beam 60 to position the bolster beam 60 during welding.

Further, the adjustment portion may configure a preset supporting force based on the specific model, size, processing parameters, etc. of the bolster beam 60. That is, when the adjustment portion is not activated or the bolster beam 60 is not welded, the adjustment portion supports the bolster beam 60 based on the preset supporting force.

In an embodiment, generating the anti-deformation adjustment strategy for regulating the deformation amount of the welding surface of the to-be-welded box body based on the deformation amount parameter further includes:
obtaining an instant welding area of the to-be-welded box body, dynamically fitting the instant welding area with a preset adjustment area, and obtaining an instant adjustment area based on dynamically fitting;
determining, in the instant adjustment area, an adjustment portion that is in an awake state and outside the instant adjustment area, and sending a sleep signal to a corresponding adjustment portion; and
determining, in the instant adjustment area, an adjustment portion that is in a sleep state and inside the instant adjustment area, and sending a wake-up signal to the corresponding adjustment portion.

The present embodiment provides another implementation of generating the anti-deformation adjustment strategy for regulating a flatness of the to-be-welded box body based on the deformation amount parameter. Since the welding position is relatively fixed during the welding process of the bolster beam 60, a single welding mechanism is generally used, and multiple welding mechanisms are used to perform a collaborative operation in some cases. However, whether it is single or collaborative welding, the deformation position on the bolster beam is dynamic. Therefore, it is necessary form the instant adjustment area, and wake up the corresponding adjustment portion according to the instant adjustment area, so that the adjustment portion may perform corresponding regulation in the area where heat and stress are relatively concentrated.

Further, the adjustment portion that is not awakened or enters a sleep state from an awake state continues to support the bolster beam 60 based on a preset supporting force and the positioning of the bolster beam 60 is formed.

It should be noted that, the awake state mentioned in the present application corresponds to a state in which the adjustment portion performs flexible and dynamic adjustment based on the corresponding deformation of the deformation of the welding surface, and the sleep state corresponds to a state where the deformation of the welding surface is small or has entered a stable state, and the adjustment portion only plays a supporting role.

In an embodiment, generating the anti-deformation adjustment strategy for regulating the deformation amount of the welding surface of the to-be-welded box body based on the deformation amount parameter further includes:
constructing a digital twin model based on the to-be-welded box body;
obtaining a twin deformation amount parameter of the digital twin model corresponding to the deformation amount parameter of the to-be-welded box body; and
generating the anti-deformation adjustment strategy based on the twin deformation amount parameter.

The present embodiment provides an implementation of constructing the anti-deformation adjustment strategy based on the digital twin model. The anti-deformation amount of the bolster beam 60 is calculated by constructing the digital twin model. The compression point, compression force, anti-deformation position, anti-deformation amount and welding process information set for each step of the bolster beam 60 are output to adjust the assembly welding process in real time and enable refined control.

In an embodiment, before obtaining the deformation amount parameter of the to-be-welded box body during the welding process, the method further includes:
constructing a finite element model based on the to-be-welded box body, and loading a welding parameter of the to-be-welded box body in the finite element model;
obtaining a first finite element characteristic value and a second finite element characteristic value based on the welding parameter during a finite element analysis process of the finite element model, where the first finite element characteristic value is an inherent strain parameter of the to-be-welded box body, and the second finite element characteristic value is an elastic strain parameter of the to-be-welded box body; and
generating a finite element analysis parameter based on the first finite element characteristic value and the second finite element characteristic value, and generating the anti-deformation adjustment strategy based on the finite element analysis parameter and the deformation amount parameter.

The present embodiment provides an implementation of constructing the anti-deformation adjustment strategy based on the finite element model. Through the finite element simulation, the model of the bolster beam 60 and the corresponding welding parameter are simulated before welding, the preset supporting parameter, a preset deformation parameter, and a preset adjustment parameter of the bolster beam 60 is obtained, thus a position of the optimal rigid constraint point of the bolster beam 60, the anti-deformation applying position, the force magnitude on the constraint point, and the anti-deformation amount are obtained.

It should be noted that, the inherent strain parameter refers to the strain that remains inside an object after an external load is removed. After the welding is completed and the external load constraints are removed, the elastic strain is restored, and the strain other than elastic strain is collectively called the inherent strain. The total post-weld deformation is controlled by reducing the inherent strain of welding.

In an embodiment, the total strain of the bolster beam 60 includes elastic strain, plastic strain, thermal strain, creep strain, phase transformation strain, etc. By applying appropriate elastic anti-deformation measures, that is, increasing elastic deformation in the opposite direction, it helps to reduce the total post-weld strain. However, the elastic reverse deformation cannot be excessive. If it is excessive, deformation in the opposite direction will occur after welding.

In an embodiment, performing anti-deformation adjustment on the to-be-welded box body during the welding process in real time based on the anti-deformation adjustment strategy includes:
obtaining a first anti-deformation adjustment decision and a second anti-deformation adjustment decision in the anti-deformation adjustment strategy, where the first anti-deformation adjustment decision includes a first welding surface of the to-be-welded box body, and the second anti-deformation adjustment decision includes a second welding surface of the to-be-welded box body;
regulating action force magnitude of an adjustment portion on the first welding surface in real time based on the first anti-deformation adjustment decision; and
regulating action force magnitude and/or a force applying position of the adjustment portion on the second welding surface in real time based on the second anti-deformation adjustment decision.

The present embodiment provides an implementation of performing anti-deformation adjustment on the to-be-welded box body during the welding process in real time based on the anti-deformation adjustment strategy. Through the flexible and dynamic adjustment of the first welding surface 10 and the second welding surface 20, the refined regulation for the bolster beam 60 during the welding process is enabled, and the manufacturing accuracy of the bolster beam 60 is improved.

In the description of this specification, description with reference to the terms "an embodiment", "some embodiments", "an example", "specific example", "some examples" and the like, refers to that specific features, structures, materials or characteristics described in combination with an embodiment or an example are included in at least an embodiment or example according to the embodiments of the present application. In this specification, schematic representations of the above terms are not necessarily directed to a same embodiment or example. Furthermore, the particular features, structures, materials or characteristics described can be combined in any suitable manner in any one or more embodiments or examples. In addition, those skilled in the art may combine the different embodiments or examples described in this specification, as well as the features of the different embodiments or examples, without conflicting each other.

It should be noted that the above embodiments are only used to explain the solutions of the present application, and are not limited thereto. Although the present application has been described in detail with reference to the foregoing embodiments, it should be understood by those skilled in the art that modifications to the solutions documented in the foregoing embodiments and equivalent substitutions to a part of the features can be made and these modifications and substitutions do not make the corresponding solutions depart from the scope of the solutions of various embodiments of the present application.

## Claims

1. An apparatus for regulating welding deformation of a box-shaped structure, comprising: a supporting portion and an adjustment portion;
the supporting portion is formed with a supporting surface that supports a to-be-welded box body;
the adjustment portion is connected to the supporting portion, and at least abuts against a welding surface of the to-be-welded box body; and
during a welding process, the adjustment portion regulates a flatness of the to-be-welded box body by adjusting an action force magnitude and/or a force application position on the welding surface of the to-be-welded box body.

2. The apparatus of claim 1, wherein the to-be-welded box body at least comprises: a first welding surface and a second welding surface;
the first welding surface is a surface of the to-be-welded box body proximal to the supporting surface; and
the second welding surface is a surface of the to-be-welded box body distal to the first welding surface.

3. The apparatus of claim 2, wherein a thickness of at least a part of the first welding surface of the to-be-welded box body is smaller than a thickness of a part of the second welding surface.

4. The apparatus of claim 2, wherein the supporting portion comprises: a supporting table and a drive unit;
a surface of the supporting table forms the supporting surface; and
the drive unit is connected to the supporting table and is used to adjust a rotation angle of the supporting table to facilitate welding of the first welding surface and the second welding surface;
wherein the supporting table is provided with multiple gaps that at least correspond to to-be-welded positions of the first welding surface.

5. The apparatus of claim 4, wherein the adjustment portion comprises: a plurality of first adjustment seats, a first adjustment cylinder and a first sensing component;
the plurality of the first adjustment seats are connected to the supporting table;
an end of the first adjustment cylinder is provided on each of the first adjustment seats, and another end of the first adjustment cylinder abuts against the first welding surface; and
the first sensing component is at least connected to the first adjustment cylinder;
wherein during the welding process, a stroke of the first adjustment cylinder is adjusted based on a parameter fed back by the first sensing component to adjust an action force magnitude on the first welding surface.

6. The apparatus of claim 4, wherein the adjustment portion comprises: a plurality of second adjustment seats, a second adjustment cylinder, a pressing rod and a second sensing component;
the plurality of the second adjustment seats are provided on a side portion of the supporting table;
an end of the second adjustment cylinder is connected to the second adjustment seat, another end of the second adjustment cylinder is connected to the pressing rod, and the second adjustment cylinder is provided vertically;
another end of the pressing rod opposite to the second adjustment cylinder abuts against the second welding surface; and
the second sensing component is at least connected to the pressing rod;
wherein during the welding process, a stroke of the second adjustment cylinder is adjusted based on a parameter fed back by the second sensing component to adjust an action force magnitude of the pressing rod on the second welding surface.

7. The apparatus of claim 6, wherein the adjustment portion further comprises: a plurality of slideways, the plurality of the slideways are provided on the side portion of the supporting table, and the second adjustment seats are slidingly matched with the slideways;
wherein during the welding process, the second adjustment seats slide along an extension direction of the slideways based on the parameter fed back by the second sensing component to adjust a force applying position of the pressing rod on the second welding surface.

8. The apparatus of claim 6, wherein the second adjustment seat comprises: a first panel, a second panel and a sliding block;
the first panel is connected to the side portion of the supporting table;
the second panel is connected to the first panel to form an L-shaped structure;
the sliding block is slidingly provided on the second panel;
the second adjustment cylinder is connected to the sliding block; and
the adjustment portion further comprises: a third adjustment cylinder and a pulling rod;
the third adjustment cylinder is provided on another surface of the first panel opposite to the side portion of the supporting table; and
an end of the pulling rod is connected to the third adjustment cylinder, another end of the pulling rod passes through an opening slot on the second panel and is connected to the sliding block.

9. The apparatus of claim 6, wherein the pressing rod is a rod-shaped structure that may adjust a telescopic length; and
during the welding process, the pressing rod adjusts the telescopic length based on the parameter fed back by the second sensing component to adjust the force applying position on the second welding surface.

10. The apparatus of any of claims 2 to 9, wherein the to-be-welded box body is a bolster beam;
the bolster beam at least comprises: through pipes, a first cover plate and a second cover plate;
two of the through pipes are provided at intervals;
the first cover plate is in the first welding surface, and is connected to the two through pipes respectively; and
the second cover plate is in the second welding surface, and is connected to the two through pipes respectively;
wherein at least a thickness of the first cover plate is smaller than a thickness of the second cover plate.

11. A method for regulating welding deformation of the box-shaped structure based on the apparatus of any of claims 1 to 10, comprising:
obtaining a deformation amount parameter of a to-be-welded box body during a welding process;
generating an anti-deformation adjustment strategy for regulating a deformation amount of a welding surface of the to-be-welded box body based on the deformation amount parameter; and
performing a real-time anti-deformation adjustment on the to-be-welded box body during the welding process based on the anti-deformation adjustment strategy.

12. The method of claim 11, wherein obtaining the deformation amount parameter of the to-be-welded box body during the welding process comprises:
obtaining a first deformation characteristic value and a second deformation characteristic value of the to-be-welded box body during the welding process, wherein the first deformation characteristic value is a deformation area parameter of the to-be-welded box body, and the second deformation characteristic value is a deformation force parameter corresponding to the first deformation characteristic value; and
generating the deformation amount parameter based on the first deformation characteristic value and the second deformation characteristic value.

13. The method of claim 12, wherein generating the anti-deformation adjustment strategy for regulating the deformation amount of the welding surface of the to-be-welded box body based on the deformation amount parameter comprises:
obtaining a plurality of preset adjustment areas based on the welding surface of the to-be-welded box body, and obtaining all adjustment portions in a corresponding preset adjustment area based on the first deformation characteristic value;
generating adjustment displacement characteristic values of each of the obtained adjustment portions based on the second deformation characteristic value, wherein the adjustment displacement characteristic values at least comprise a first direction displacement parameter of the adjustment portion perpendicular to the welding surface of the to-be-welded box body, and a second direction displacement parameter of the adjustment portion parallel to the welding surface of the to-be-welded box body; and
generating the anti-deformation adjustment strategy of the preset adjustment areas based on all of the adjustment displacement characteristic values.

14. The method of claim 13, wherein generating the anti-deformation adjustment strategy for regulating the deformation amount of the welding surface of the to-be-welded box body based on the deformation amount parameter further comprises:
obtaining an instant welding area of the to-be-welded box body, dynamically fitting the instant welding area with the preset adjustment area, and obtaining an instant adjustment area based on the dynamically fitting;
determining, in the instant adjustment area, an adjustment portion that is in an awake state and is outside the instant adjustment area, and sending a sleep signal to a corresponding adjustment portion; and
determining, in the instant adjustment area, an adjustment portion that is in a sleep state and is inside the instant adjustment area, and sending a wake-up signal to the corresponding adjustment portion.

15. The method of any of claims 11 to 14, wherein generating the anti-deformation adjustment strategy for regulating the deformation amount of the welding surface of the to-be-welded box body based on the deformation amount parameter further comprises:
constructing a digital twin model based on the to-be-welded box body;
obtaining a twin deformation amount parameter of the digital twin model corresponding to the deformation amount parameter of the to-be-welded box body; and
generating the anti-deformation adjustment strategy based on the twin deformation amount parameter.

16. The method of any of claims 11 to 14, wherein before obtaining the deformation amount parameter of the to-be-welded box body during the welding process, the method further comprises:
constructing a finite element model based on the to-be-welded box body, and loading a welding parameter of the to-be-welded box body in the finite element model;
obtaining a first finite element characteristic value and a second finite element characteristic value based on the welding parameter during a finite element analysis process of the finite element model, wherein the first finite element characteristic value is an inherent strain parameter of the to-be-welded box body, and the second finite element characteristic value is an elastic strain parameter of the to-be-welded box body; and
generating a finite element analysis parameter based on the first finite element characteristic value and the second finite element characteristic value, and generating the anti-deformation adjustment strategy based on the finite element analysis parameter and the deformation amount parameter.

17. The method of any of claims 11 to 14, wherein performing anti-deformation adjustment on the to-be-welded box body during the welding process in real time based on the anti-deformation adjustment strategy comprises:
obtaining a first anti-deformation adjustment decision and a second anti-deformation adjustment decision in the anti-deformation adjustment strategy, wherein the first anti-deformation adjustment decision comprises a first welding surface of the to-be-welded box body, and the second anti-deformation adjustment decision comprises a second welding surface of the to-be-welded box body;
regulating an action force magnitude of an adjustment portion on the first welding surface in real time based on the first anti-deformation adjustment decision; and
regulating an action force magnitude and/or a force applying position of the adjustment portion on the second welding surface in real time based on the second anti-deformation adjustment decision.
